# EUROPÄISCHE PATENTSCHRIFT

(11) **EP 1 476 376 B1**
(45) Veröffentlichungstag und Bekanntmachung des Hinweises auf die Patenterteilung: **23.01.2008**
(21) Anmeldenummer: 02769836.4
(22) Anmeldetag: 05.11.2002
(51) Int. Cl.: B65F 3/12, B65F 3/08, B65F 1/10, B65F 1/12, B65F 1/14

(54) **SAMMELN, TRANSPORTIEREN UND SICHERE ENTSORGUNG VON DOKUMENTEN UND DATENTRÄGERN**
COLLECTION, TRANSPORT, AND SECURE DISPOSAL OF DOCUMENTS AND DATA CARRIERS
COLLECTE, TRANSPORT ET ELIMINATION SECURISEE DE DOCUMENTS ET DE SUPPORTS DE DONNEES

(30) Priorität: 21.02.2002 CH 300022002
(43) Veröffentlichungstag der Anmeldung: 17.11.2004
(73) Patentinhaber: HUBTECH AG, 8600 Dübendorf (CH)
(72) Erfinder: Huber, Hansjörg, 8117 Fällanden (CH)
(74) Vertreter: Schneider Feldmann AG Patent- und Markenanwälte
(86) Internationale Anmeldenummer: PCT/CH2002/000595
(87) Internationale Veröffentlichungsnummer: WO 2003/070606

(56) Entgegenhaltungen:
- WO-A-01/96215
- DE-A- 19 945 052
- GB-A- 2 243 868
- US-A- 1 715 364
- US-A- 2 602 584

## Beschreibung

Die Erfindung betrifft ein Verfahren und ein Entsorgungssystem mit Überwachungsvorrichtung zum Sammeln und Fördern von Dokumenten und Datenträgern für die sichere Entsorgung nach dem Oberbegriff des jeweils entsprechenden unabhängigen Patentanspruches.

Heute werden Akten in vielen Büros direkt dem lokalen und eigenen Aktenvernichter übergeben. Dies ist aber für vertrauliche Akten nur beschränkt sicher genug. Zu oft sind Indiskretionen auf der Basis zu vernichtender Akten vorgekommen, indem Teile davon aus Papierabfällen der Vernichtung entzogen wurden. Die gleiche Problematik stellt sich auch mit digitalen Datenträgern mit vertraulichen Daten. Ein Löschen der Daten durch einen Computer bedeutet noch lange nicht, dass der Datenträger keine Daten mehr enthält und nicht mehr lesbar ist.

Aus diesen Gründen werden in verschiedenen sensibilisierten Betrieben die Akten und anderen Datenträger zentral gesammelt und "kontrolliert" vernichtet, geshreddert und verbrannt. Für dieses Sammeln werden meist besonders gekennzeichnete Behälter verwendet.

Die heute bestehenden Behälter zum Sammeln von Akten- und Datenträgern besitzen mit konventionellen Schlössern versehene, abschliessbare Deckel mit Einwurfschlitzen und Zugriffsschikanen. Diese Behälter sind oft fahrbar auf Rädern. Diese Behälter müssen zum Entleeren zuerst geöffnet und dann maschinell gehoben und gedreht werden. Normalerweise werden diese Behälter in grössere Behälter oder in umgebaute Kehrichtentsorgungsfahrzeuge gekippt.

Die Zugriffsmöglichkeiten des Bedienpersonals und von Dritten sowie das notwendige Öffnen beim Umschütten sind aber als Schwachstellen erkannt und in Bezug auf Vertraulichkeit als problematisch einzustufen.
Aus WO-A-01/96215 ist ein gattungsgemäßes System aus verschliessbaren Einzelbehältern und einem Sammelbehälter zum Entleeren solcher Einzelbehälter bekannt. Es umfasst einen Sammelbehälter mit einer Schleuse. Durch die Schleuse kann ein Einzelbehälter in den Sammelbehälter eingeführt werden. Der Einzelbehälter kann nur entleert werden, wenn er sich vollständig im Sammelbehälter befindet und von diesem vollständig umschlossen ist. Nach dem entleeren des Inhaltes des Einzelbehälters in den Sammelbehälter kann der Einzelbehälter wieder durch die Schleuse aus dem Sammelbehälter heraustransportiert werden. Der Einzelbehälter kann mit einem elektronisch betätigbaren Schloss versehen sein.

Aus DE 19945062 ist ein System und eine Vorrichtung zum kontrollierten Transport sicherungsbedürftiger Güter bekannt. Mit einem Fahrzeug wird ein von diesem lösbarer Behälter transportiert. Der Behälter ist mit Identifikationsmitteln versehen. Die Identifikationsmittel umfassen einen dem Behälter individuell zugeordneten Behältercode, eine Positionserfassungseinheit und ein Übertragungsvorrichtung zum drahtlosen Übertragen des Behältercodes und der Positionsdaten an eine Zentrale. Dadurch kann jederzeit die aktuelle Position jedes Behälters zentral festgestellt und überwacht werden.

Die Aufgabe der Erfindung besteht darin, eventuelle Lücken beim Entsorgen von vertraulichen Dokumenten und Datenträgern zu schliessen, damit Entwendung und missbräuchliche Verwendung verhindert wird. Als Entsorgungsgut werden in erster Linie dezentral anfallende Akten, Pläne, Folien und Datenträger mit schützenswertem Inhalt angesehen.

Diese Aufgabe wird durch ein Verfahren nach dem Anspruch 1 und mit einem Entsorgungssystem mit Überwachungsvorrichtung nach Anspruch 2 gelöst.

Die Erfindung wird nachstehend im Zusammenhang mit den Zeichnungen beschrieben. Es zeigen:
- Figuren 1: einen gesicherten Sammelbehälter in verschiedenen Ansichten;
- Figur 2: einen Transportcontainer;
- Figur 3: einen Sammelbehälter beim Umleeren in den Transportcontainer;
und
- Figur 4: eine schematische Darstellung eines Entsorgungsweges

Der Grundgedanke für die Lösung der Erfindungsaufgabe besteht in der Schaffung eines geschlossenen, überwachten Systems von Geräten und Einrichtungen, die folgenden erhöhten Ansprüchen genügen:
a) Die Zugriffssicherheit für Entsorgungsgut ab Einwurf in gesicherten Behältern muss garantiert sein. Dies bedingt auch ein geschlossenes, zugriffsfreies Umschütten in Transportcontainer oder Fahrzeuge bis zur definitiven Entsorgung.
b) Jedes Öffnen und Schliessen aller Behälter und Container soll elektromechanisch erfolgen, automatisch überwacht und protokolliert werden.
c) Die Überwachung des Entsorgungsgutes soll durch lückenlose Verfolgung der Sammelbehälter und Transportcontainer durch eindeutige Identifikation und Erfassung von Ortsdaten, Zeit, und elektronischer Identifikation von Behältern, Transportcontainern, Fahrzeugen und Bedienpersonal garantiert werden können.
d) Die Sicherheit des Bedienungspersonals ist wichtig. Dies wird gewährleistet, indem Klemm- und Quetschstellen durch Automation der Elemente der Vorrichtungen vermieden werden.

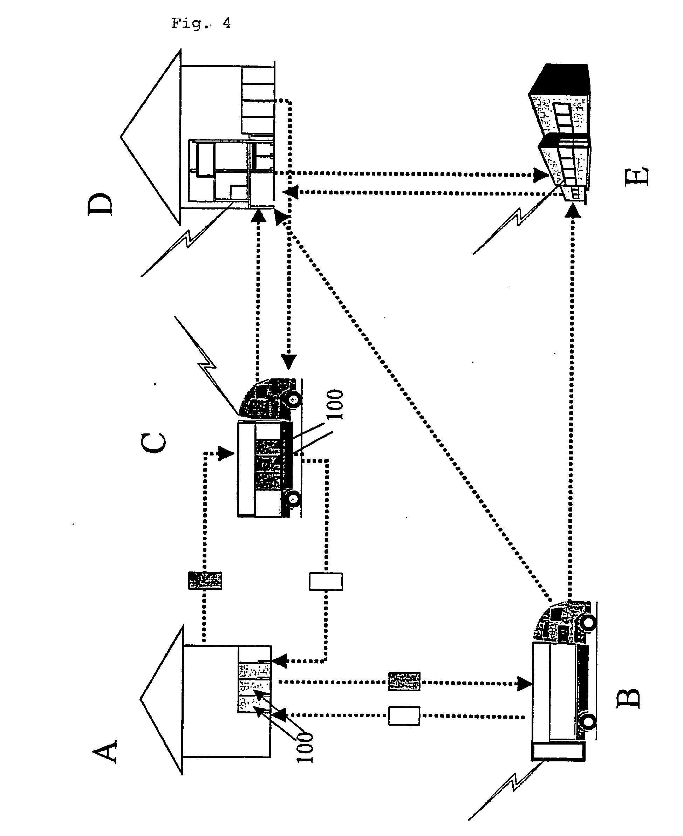

Das erfindungsgemässe Verfahren zum Sammeln und Fördern von Dokumenten und Datenträgern für die sichere Entsorgung ist in der Figur 4 schematisch dargestellt. Bei einer Firma A werden die sicher zu entsorgenden Dokumente oder Datenträger in gesicherten Sammelbehältern 100 gesammelt. Die gesicherten Sammelbehälter 100 werden unter lückenloser Überwachung und Protokollierung in Transportcontainer 12 auf Sammelfahrzeug B, Bahnwagen oder andere Transportfahrzeuge umgeschüttet. Mit dem Transportfahrzeug gelangt der Transportcontainer 12 zu einer Entsorgungsanlage E. Hier wird der Transportcontainer 12 wiederum unter lückenloser Überwachung und Protokollierung entleert und der Inhalt direkt einer Shredder- oder Verbrennungsanlage übergeben.

Alternativ können die gesicherten Sammelbehälter 100 unter lückenloser Überwachung und Protokollierung mittels Transportfahrzeugen C eingesammelt werden. Sie gelangen dann zu einem Stützpunkt D, wo die gesicherten Sammelbehälter in einen Transportcontainer 12 unter lückenloser Überwachung und Protokollierung umgefüllt werden. Der Transportcontainer 12 wird dann vom Stützpunkt D zur Entsorgungsanlage E transportiert, wo der Inhalt gesichert entsorgt wird.

Dieses Entsorgungsverfahren wird durch eine erfindungsgemässe Vorrichtung zur Überwachung, Kontrolle und Protokollierung der benützten Behälter und Umladevorrichtungen bewerkstelligt. Zur Überwachung, Kontrolle und Protokollierung der benützten Behälter und damit des ganzen Weges der zu entsorgenden Dokumente/Datenträger dienen sogenannte TAG's an den Behältern und zugehörenden Lesegeräten mit Datenspeicher. Als TAG eignen sich Magnetstreifen, Strichcode-Etiketten, geprägte oder magnetisierte Metall- oder Kunststoffplaketten, Transponder oder dergleichen. So kann jeder Sammelbehälter 100, Transportcontainer 12, Firma A, Stützpunkte D und damit die Herkunft und der Weg des Entsorgungsgutes immer eindeutig identifiziert werden.

Anschliessend ist jederzeit bekannt, wo der Inhalt des jeweiligen Transportcontainers zu welcher Zeit ist. Dazu wird beim Transportcontainer 12 und/oder beim Sammelfahrzeug C (Ladeeinheit) der mittels Lesegerät eingelesene Transportcontainercode samt Uhrzeit und geografischer Position gespeichert und diese Daten beim nächsten Vorgang jeweils weitergegeben.

Das Entsorgungsgut gelangt nun per Transportfahrzeug zur Entsorgungsstelle. Hier wird der Transportcontainer 12 unter Aufsicht durch Überwachungspersonal und/oder Videoüberwachung geöffnet und entleert. Das Entsorgungsgut wird dem Shredder oder der Verbrennung übergeben. Dieser Vorgang geschieht normalerweise in einem geschlossenen, überwachten Raum. Er wird entsprechend protokolliert und bestätigt.

In einer weiteren Automatisierung kann zwischen Transportcontainer 12 resp. Transportfahrzeug und Entsorgungsanlage E wiederum eine Überwachungs- und Protokollierungsschnittstelle mittels TAG oder dergleichen und entsprechendem Lesegerät eingesetzt werden. Voraussetzung ist dann, dass die Entsorgungsanlage E eine Beschickungsvorrichtung aufweist, an welche der Transportcontainer 12 angedockt werden kann. Der Transportcontainer 12 ist dann ebenfalls mit einer automatischen und gesteuerten Entladevorrichtung versehen.

Die beschriebene Überwachung kann mittels GPS Lokalisierungsdaten, die mit SMS-Technik übermittelt werden, ergänzt werden. Damit ist auch eine Kontrolle des Standortes jederzeit eindeutig sichergestellt. Die Logistik des Entsorgungsweges lässt sich bis und mit den einzelnen Transportwegen und Fahrzeugdispositionen optimieren.

Das erfindungsgemässe Entsorgungssystem mit Überwachungsvorrichtung umfasst Sammelbehälter 100, Transportcontainer 12 und Elemente zum gesicherten und protokollierten Umschütten des Sammelgutes vom Sammelbehälter 100 zum Transportcontainer 12 und allenfalls vom Transportcontainer 12 zur Entsorgungsanlage E.

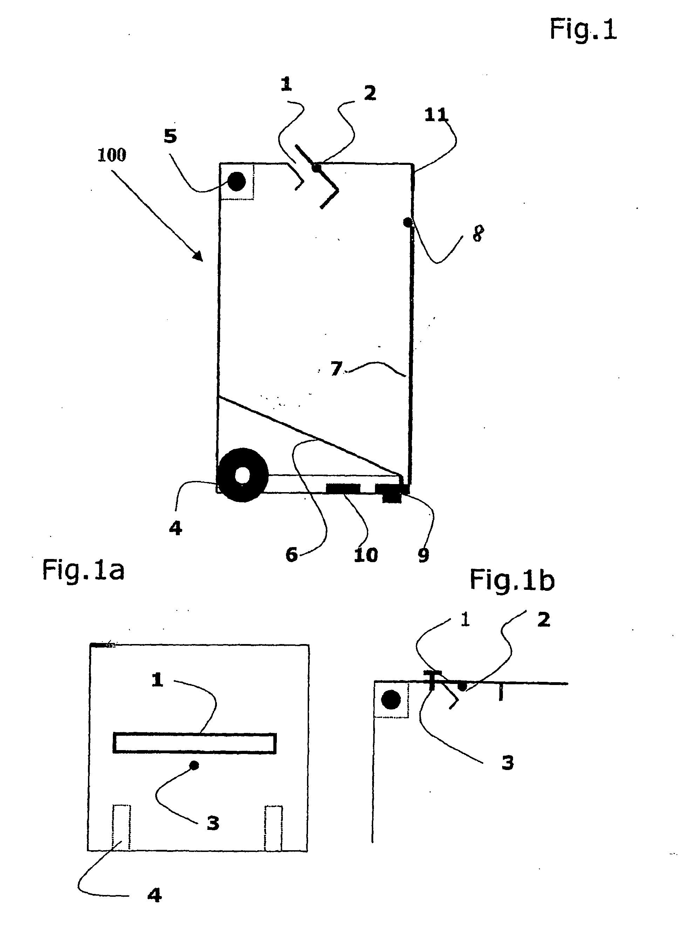

In den Figuren 1, 1a und 1b ist der Sammelbehälter 100 in drei verschiedenen Ansichten mit den wichtigen Elementen dargestellt. Ein schräg geneigter, mit Schikane versehener, schliessbarer Einwurf 1 dient zur Verhinderung von Rückfall des Entsorgungsgutes. Er hemmt auch die Sauerstoffzufuhr bei Feuergefahr durch eingeworfene glimmende Gegenstände. Über einen Drehpunkt 2 kann der Behältereinwurf mit Schliessung 3 verschlossen werden. Im Behälter sind Räder 4 und ein Handlauf 5 integriert. Sie gestatten einfaches Handling und raumsparendes Aufstellen in Gebäuden und auf Lastwagenbrücken. Die eingebaute Bodeneinheit 6 ist relativ stark geneigt. Sie hilft zusammen mit der gross ausgestalteten Auswurfklappe 7 dem Entleeren des Entsorgungsgutes durch die Schwerkraft. Die Auswurfklappe 7 kann um eine Schwenkachse schwenkbar oder als Schiebekappe verschiebbar ausgestaltet sein. Ein elektromechanischer Zapfenverschluss 9 schliesst und öffnet den Behälter nachdem über die Elektrokontakte 10 und der entsprechenden Identifizierung am TAG 11 eine Entleerung durch eine Steuerung frei gegeben wird.

Die Steuerung kann am Sammelbehälter 100 oder am Transportcontainer 12 angeordnet sein. Zur Stromversorgung dienen Batterien, Netzanschlüsse oder die Stromversorgung des Transportfahrzeuges.

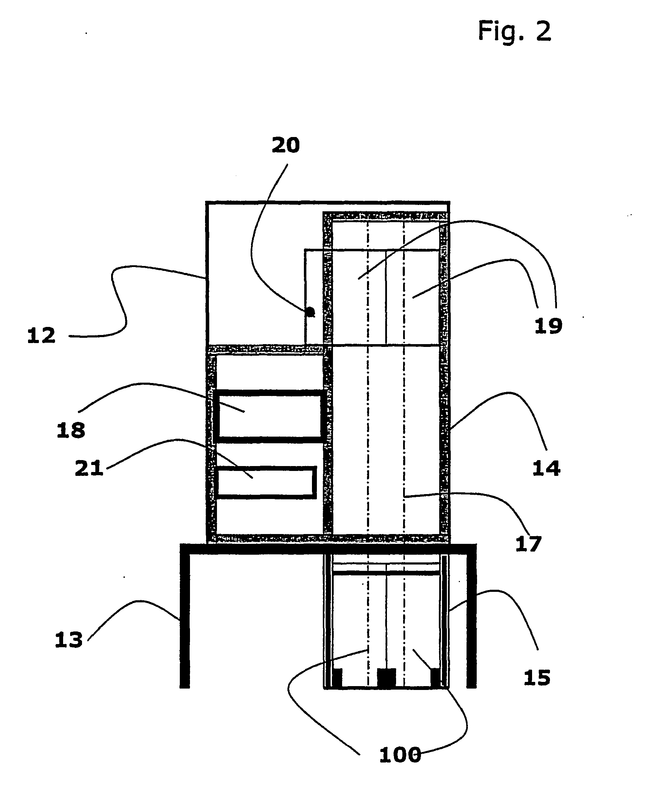

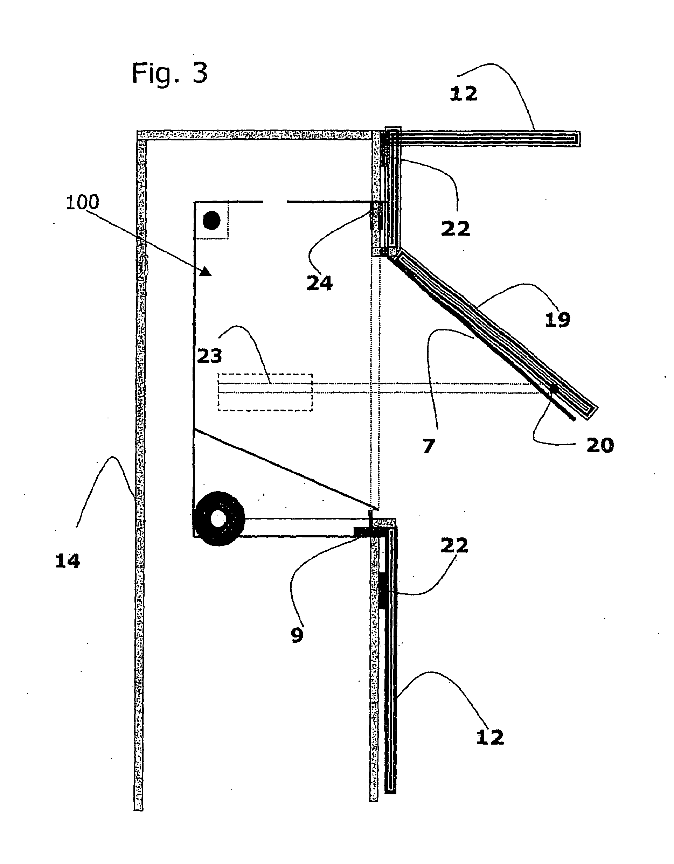

In Fig. 2 ist ein handelsüblicher Transportcontainer 12 (auch Auflieger/Wechselkoffer/Container genannt) dargestellt, der auf Stützen 13 abgestellt ist. Dieser Transportcontainer kann durch LKW mit entsprechender Einrichtung bekannter Art übernommen werden. Der Transportcontainer wird beispielsweise unterfahren und mittels Luftfederelementen so angehoben, dass die Stützen 13 umgeklappt werden können. An diesen Transportcontainer wird eine Hebeeinheit 14 beispielsweise mittels Hubstapler angedockt. Eine Teleskopeinrichtung 15 verlängert die Ladeeinheit so, dass zwei Sammelbehälter 100 ebenerdig in eine Hebeeinheit eingeschoben werden können. Mit einer elektromechanischen oder hydraulischen Hebeeinrichtung 17 werden die Sammelbehälter 100 auf die Einwurfhöhe gegenüber geschlossenen Einwurfklappen 19 gebracht. Nach der elektronischen Identifizierung des TAG 11 mittels einem passenden Lesegerät oder Empfänger wird über eine Steuerung 21 ein Öffnungsantrieb 23 zum Entleeren der Sammelbehälter 100 betätigt. Der Öffnungsantrieb 23 (Figur 3) wird durch Kopplungselemente 20 mit den Auswurfklappen 7 und den Einwurfklappen 19 verbunden. Nach der Entleerung werden die Einwurfklappen 19 am Transportcontainer und die Auswurfklappen 7 an den Behältern gleichzeitig geschlossen und mittels Zapfenverschluss verriegelt. Danach werden die Sammelbehälter 100 zur Entnahme aus der Hebeeinheit 14 abgesenkt.

In Fig. 3 ist die Hebeeinheit 14 über Kupplungen 22 an den Transportcontainer 12 angekoppelt. Die hochgefahrenen Sammelbehälter 100 sind in Einwurfhöhe. Der TAG 11 jedes Sammelbehälters 100 ist gegenüber einem Lesegerät 24 die mit der Steuerung 21 verbunden ist. Nach Identifizierung erfolgt die Freigabe zur Öffnung des Zapfenverschlusses 9 der Auswurfklappe 7 unter gleichzeitigem Aktivieren des Öffnungsantriebs 23 zum Öffnen der Einwurfklappen 19. Der gesamte Öffnungsantrieb 23 befindet sich seitlich der Sammelbehälter 100. Nach Einwurf des Entsorgungsgutes werden mittels Öffnungsantrieb 23 und dem Kopplungselement 20 die Einwurfklappen 19 und Auswurfklappe 7 so zurückbewegt, dass der Zapfenverschluss 9 elektromechanisch verschlossen werden kann. Danach erfolgt Freigabe über die Steuerung 21 Fig.2 für die Sammelbehälter 100. Die Auswurfklappe 7 des Sammelbehälters 100 ist hier in eine schwenkbaren Ausführung dargestellt. Sie kann auch noch oben, seitwärts oder nach unten verschiebbar ausgestaltet sein. Das gleiche gilt für die Einwurfklappe 19. Entscheidend ist, dass diese beiden Klappen eine mechanisch und/oder elektrisch gekoppelte Funktionseinheit bilden. Das bedeutet, dass die Einwurfklappe 19 des Transportcontainers nicht geöffnet werden kann, wenn nicht ein Sammelbehälter 100 angekoppelt und identifiziert ist. Ebenso kann die Auswurfklappe 7 des Sammelbehälters 100 nur durch die Öffnungsantrieb 23 gleichzeitig mit der Einwurfklappe 19, nach erfolgter Identifikation des TAG 11 betätigt werden.

### Bezugszeichen - Verzeichnis

- 1: Einwurf
- 2: Drehpunkt, Scharnier
- 3: Einwurf- Schliessung
- 4: Räder
- 5: Handlauf
- 6: Schräge Bodeneinheit
- 7: Auswurfklappe
- 8: Scharnier Auswurfklappe
- 9: Zapfenverschluss
- 10: Elektrokontakte
- 11: Datenträger (TAG)
- 12: Transportcontainer
- 13: Stützen
- 14: Hebeeinheit
- 15: Teleskopeinrichtung
- 100: Sammelbehälter
- 17: Hebeeinrichtung
- 18: Hilfsantrieb, Stromversorgung
- 19: Einwurfklappen an Transportcontainer
- 20: Kopplungselement für 7, 19
- 21: Steuerung
- 22: Kupplung Ladeeinheit an Transportcontainer
- 23: Öffnungsantrieb
- 24: Lesegerät

## Patentansprüche

1. Verfahren zum Sammeln und Fördern von Dokumenten und Datenträgern für die sichere Entsorgung, **dadurch gekennzeichnet, dass**
a) Entsorgungsgut in gegen Zugriff gesicherten Sammelbehältern (100), wobei jeder Sammelbehälter (100) mit einem elektromechanischen Verschluss (9) zur gesteuerten Betätigung einer Auswurfklappe (7) und mit einem TAG (11) zur Identifizierung des Sammelbehälters (100) versehen ist, lokal gesammelt wird, worauf der Inhalt aus den gesicherten Sammelbehältern (100) zugriffsfrei in Transportcontainer (12) umgeschüttet werden, wobei jeder Transportcontainer (12) mit einem Lesegerät (24) zum Lesen des TAG's (11) versehen ist und wobei ein gesteuerter Öffnungsantrieb (23) eine Einwurfklappe (19) des Transportcontainers (12) und gleichzeitig die Auswurfklappe (7) des Sammelbehälters (100) öffnet und schliesst, wonach der Inhalt der Transportcontainer (12) in eine Entsorgungsanlage (E) geleert werden zur definitiven Entsorgung, wobei
b) das Entsorgungsgut mittels einer Überwachungsvorrichtung lückenlos durch Identifikation und Datenerfassung von Ortsdaten, Zeit, elektronische Behälter-Transportcontainer- Identifikation und Fahrzeugen verfolgt und protokolliert wird, indem jedes Öffnen und Schliessen der Sammelbehälter (100) und Transportcontainer (12) elektromechanisch erfolgt, automatisch überwacht und protokolliert wird.

2. Entsorgungssystem mit Überwachungsvorrichtung zum Sammeln und Fördern von Dokumenten und Datenträgern für die sichere Entsorgung mit mindestens einem Sammelbehälter (100) zum lokalen Einsammeln von Entsorgungsmaterial, mit mindestens einem Transportcontainer (12) und einer Entsorgungsanlage (E), **dadurch gekennzeichnet, dass**
a) jeder Sammelbehälter (100) gegen Zugriff gesichert, mit einem elektromechanischen Verschluss (9) zur gesteuerten Betätigung einer Auswurfklappe (7) und mit einem TAG (11) zur Identifizierung des Sammelbehälters (100) versehen ist, und
b) jeder Transportcontainer (12) mit einem Lesegerät (24) zum Lesen des TAG's (11) eines zu entleerenden Sammelbehälters (100) versehen ist und dass ein gesteuerter Öffnungsantrieb (23) eine Einwurfklappe (19) des Transportcontainers (12) und gleichzeitig die Auswurfklappe (7) des Sammelbehälters (100) öffnet, wobei das Lesegerät (24) mit einem Datenspeicher zum Protokollieren der Identifikation des geleerten Sammelbehälters (100) versehen ist.

3. Entsorgungssystem mit Überwachungsvorrichtung nach Anspruch 2, **dadurch gekennzeichnet, dass** der Sammelbehälter (100) mit schräg angestellter Bodeneinheit (6) versehen ist.

4. Entsorgungssystem mit Überwachungsvorrichtung nach Anspruch 2, **dadurch gekennzeichnet, dass** Sammelbehälter (100) und Transportcontainer (12) mit einer Kupplungsvorrichtung versehen sind zur funktionellen Verknüpfung der Freigabe der Bedienung der korrespondierenden Auswurfklappe (7) und Einwurfklappe (19).

5. Entsorgungssystem mit Überwachungsvorrichtung nach Anspruch 4, **dadurch gekennzeichnet, dass** die Kupplungsvorrichtung mittels Bolzen, Riegeln oder mit Drehverschlüssen verriegelbar und elektromechanisch steuerbar ist.

6. Entsorgungssystem mit Überwachungsvorrichtung nach Anspruch 4 oder 5, **dadurch gekennzeichnet, dass** eine Freigabe der Verriegelungen durch mechanische, elektrische oder magnetische Betätigung erfolgt unter vorheriger oder gleichzeitiger Identifikation der Sammelbehälter (100) und/oder Transportcontainer (12), und wobei eine Protokollierung und Registrierung der Kupplungsvorgänge vorgenommen wird.

7. Entsorgungssystem mit Überwachungsvorrichtung nach einem der Ansprüche 2 bis 7, **dadurch gekennzeichnet, dass** Auswurfklappen (7) und Einwurfklappen (19) motorisch oder magnetisch betätigbar sind.

8. Entsorgungssystem mit Überwachungsvorrichtung nach einem der Ansprüche 2 bis 7, **dadurch gekennzeichnet, dass** Auswurfklappen (7) des Sammelbehälters (100) und Einwurfklappen (19) des Transportcontainers (12) durch den einzigen Öffnungsantrieb (23) betätigt werden, wobei das korrespondierende zweite Abschlussorgan durch eine formschlüssige Verbindung in der Bauart eines Mitnehmers mitbetätigt wird.

9. Entsorgungssystem mit Überwachungsvorrichtung nach Anspruch 2, **dadurch gekennzeichnet, dass** die Entsorgungsanlage (E) eine gesichert verschliessbare Beschickungsvorrichtung mit einer maschinell lesbaren Identifikation oder mit einer Schnittstelle zur Übernahme der Daten vom Datenspeicher des Transportcontainers (12) aufweist.

10. Entsorgungssystem mit Überwachungsvorrichtung nach Anspruch 2, **dadurch gekennzeichnet, dass** Transportcontainer (12) und Beschickungsvorrichtung der Entsorgungsanlage (E) mit einer Kupplungsvorrichtung zur funktionellen Verknüpfung der Freigabe der Bedienung versehen sind.

## Claims

1. A method for collecting and conveying documents and data carriers for the secure disposal, **characterised in that**
a) disposal material is collected locally in collection containers (100) which are secured against access, wherein each collection container (10) is provided with an electromechanical closure (9) for the controlled actuation of an ejection flap (7) and is provided with a tag (11) for the identification of the collection container (100), whereupon the contents, in an access-free manner, are tipped out of the secured collection containers (100) into transport containers (12), wherein each transport container (12) is provided with a read apparatus (24) for reading the tag (11), and wherein a controlled opening drive (23) opens and closes an insertion flap (19) of the transport container (12) and simultaneously the ejection flap (7) of the collection container (100), whereupon the contents of the transport container (12) are emptied into a disposal installation (E) for the definitive disposal, wherein
b) the disposal material is tracked and protocolled in a comprehensive manner by way of identification and data acquisition of location data, time, electronic container - transport container identification and vehicles, **in that** each opening and closure of the collection container (100) and transport container (12) is effected electromechanically, and is automatically monitored and protocolled.

2. A disposal system with a monitoring device for collecting and conveying documents and data carriers for the secure disposal, with at least one collection container (100) for the local collection of disposal material, with at least one transport container (12) and a disposal installation (E), **characterised in that**
a) each collection container (100), secured against access, is provided with an electromechanical closure (9) for the controlled actuation of an ejection flap (7) and with a tag (11) for the identification of the collection container (100), and
b) each transport container (12) is provided with a read apparatus (24) for reading the tag (11) of a collection container (100) to be emptied, and that a controlled opening drive (23) opens an insertion flap (19) of the transport container (12) and simultaneously the ejection flap (7) of the collection container (100), wherein the read apparatus (24) is provided with a data memory for protocolling the identification of the emptied collection container (100).

3. A disposal system with a monitoring device according to claim 2, **characterised in that** the collection container (100) is provided with an obliquely set base unit (6).

4. A disposal system with a monitoring device according to claim 2, **characterised in that** the collection container (100) and the transport container (12) are provided with a coupling device for the functional linking of the release of the operation of the corresponding ejection flap (7) and insert flap (19).

5. A disposal system with a monitoring device according to claim 4, **characterised in that** the coupling device is lockable and electromechanically controllable by way of bolts, bars or with rotation closures

6. A disposal system with a monitoring device according to claim 4 or 5, **characterised in that** a release of the locking is effected by way of mechanical, electrical or magnetic actuation amid prior or simultaneous identification of the collection containers (100) and/or transport container, and wherein a protocolling and registration of the coupling procedures is carried out.

7. A disposal system with a monitoring device according to one of the claims 2 to 7, **characterised in that** ejection flaps (7) and insert flaps (19) may be actuated by motor or in a magnetic manner.

8. A disposal system with a monitoring device according to one of the claims 2 to 7, **characterised in that** ejection flaps (7) of the collection container (100) and the insert flaps (19) of the transport container (12) are actuated by way of the single opening drive (23), wherein the corresponding second closure element is co-actuated by way of a positive-fit connection in the construction manner of a catch.

9. A disposal system with a monitoring device according to claim 2, **characterised in that** the disposal installation (E) has a securely closable feed device with machine-readable identification or with an interface for taking over the data from the data memory of the transport container (12).

10. A disposal system with a monitoring device according to claim 2, **characterised in that** the transport container (2) and feed container of the disposal installation (E) are provided with a coupling device for the functional linking of the release of the operation.

## Revendications

1. Procédé de collecte et de transport de documents et de supports de données pour l'évacuation en toute sécurité, **caractérisé en ce que**
a) des produits à évacuer sont collectés localement, dans des conteneurs de collecte (100) sécurisés contre l'accès, chaque conteneur de collecte (100) étant muni d'une fermeture électromécanique (9) pour la manoeuvre commandée d'un volet d'éjection (7) et d'un TAG (11) pour l'identification du conteneur de collecte (100), suite à quoi, le contenu est transvasé, libre à l'accès, à partir des conteneurs de collecte (100) sécurisés dans des conteneurs de transport (12), chaque conteneur de transport (12) étant muni d'un lecteur (24) pour la lecture du TAG (11) et un entraînement d'ouverture (23) commandé ouvrant et fermant un volet d'introduction (19) du conteneur de transport (12) et simultanément le volet d'éjection (7) du conteneur de collecte (100), suite à quoi, le contenu de conteneur de collecte (12) est vidé dans une installation d'évacuation, pour l'évacuation définitive,
b) les produits à évacuer sont suivis et consignés sans faille au moyen d'un dispositif de supervision, par identification et saisie de données concernant la localisation, l'heure, l'identification électronique des conteneurs et conteneurs de transport et des véhicules, **en ce que** chaque ouverture et fermeture des conteneurs de collecte (100) et conteneurs de transport (12) est effectuée de façon électromécanique, supervisée et consignée automatiquement.

2. Système d'évacuation, avec dispositif de supervision pour la collecte et le transport de documents et de supports de données pour l'évacuation en toute sécurité, avec au moins un conteneur de collecte (100), pour la collecte locale de matières à évacuer, avec au moins un conteneur de transport (12) et une installation d'évacuation (E), **caractérisé en ce que**
a) chaque conteneur de collecte (100) est sécurisé contre l'accès avec une fermeture électromécanique (9) pour la manoeuvre commandée d'un volet d'éjection (7) et avec un TAG (11), pour l'identification du conteneur de collecte (100), et
b) chaque conteneur de transport (12)est muni d'un lecteur (24) pour la lecture du TAG (11) d'un conteneur de collecte (100) destiné à être évacué et **en ce qu'**un entraînement d'ouverture (23) commandé ouvre un volet d'introduction (19) du conteneur de transport (12), et simultanément le volet d'éjection (7) du conteneur de collecte (100), le lecteur (24) étant muni d'une mémoire de données, pour l'identification du conteneur de collecte (100) vidé.

3. Système d'évacuation, avec dispositif de supervision selon la revendication 2, **caractérisé en ce que** le conteneur de collecte (100) est muni d'une unité de fond (6) mise en prise en inclinaison.

4. Système d'évacuation, avec dispositif de supervision selon la revendication 2, **caractérisé en ce que** les conteneurs de collecte (100) et les conteneurs de transport sont munis d'un dispositif d'accouplement pour l'enchaînement fonctionnel de la validation de la manoeuvre du volet d'éjection (7) et du volet d'introduction (19) correspondants.

5. Système d'évacuation, avec dispositif de supervision selon la revendication 4, **caractérisé en ce que** le dispositif d'accouplement est susceptible d'être verrouillé au moyen de boulons, de verrous ou avec de verrouillages demi tour et d'être commandé par moyen électromécanique.

6. Système d'évacuation, avec dispositif de supervision selon la revendication 4 ou 5, **caractérisé en ce qu'**une validation des verrouillages s'effectue par manoeuvre mécanique, électrique ou magnétique avec identification préalable ou simultanée des conteneurs de collecte (100) et/ou des conteneurs de transport (12), et une consignation et un enregistrement des opérations d'accouplement étant effectués.

7. Système d'évacuation, avec dispositif de supervision selon l'une quelconque des revendications 2 à 7, **caractérisé en ce que** les volets d'éjection (7) et les volets d'introduction (19) sont susceptibles d'être manoeuvrés par moteur ou par moyen magnétique.

8. Système d'évacuation, avec dispositif de supervision selon l'une quelconque des revendications 2 à 7, **caractérisé en ce que** des volets d'éjection (7) du conteneur de collecte et des volets d'introduction (19) du conteneur de transport (12) sont manoeuvrés par le seul entraînement d'ouverture (23), le deuxième organe de fermeture correspondant étant co-manoeuvré par une liaison par complémentarité de forme du type d'un entraîneur.

9. Système d'évacuation, avec dispositif de supervision selon la revendication 2, **caractérisé en ce que** l'installation d'évacuation (E) comporte un dispositif de chargement sécurisé, verrouillable avec une identification lisible mécaniquement ou avec une interface pour la reprise de données à partir de la mémoire de données du conteneur de transport (12).

10. Système d'évacuation, avec dispositif de supervision selon la revendication 2, **caractérisé en ce que** les conteneurs de transport (12) et le dispositif de chargement de l'installation d'évacuation (E) sont munis d'un dispositif d'accouplement pour l'enchaînement fonctionnel de la validation de la manoeuvre.
